(19) **Europäisches Patentamt European Patent Office Office européen des brevets**

(11) **EP 2 552 682 B1**

(12) **EUROPEAN PATENT SPECIFICATION**

(45) Date of publication and mention
of the grant of the patent:
**14.01.2015 Bulletin 2015/03**

(51) Int Cl.:
***B29D 11/00*** *(2006.01)*     ***B05C 3/09*** *(2006.01)*
***B05D 1/00*** *(2006.01)*     ***B05D 1/18*** *(2006.01)*
*B05D 3/12* *(2006.01)*     *B05C 3/10* *(2006.01)*

(21) Application number: **10712857.1**

(22) Date of filing: **02.04.2010**

(86) International application number:
**PCT/US2010/029754**

(87) International publication number:
**WO 2011/123132 (06.10.2011 Gazette 2011/40)**

(54) **METHOD OF DIP-COATING A LENS**

VERFAHREN ZUR TAUCHBESCHICHTUNG EINER LINSE

PROCÉDÉ DE REVÊTEMENT D'UNE LENTILLE PAR TREMPAGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**06.02.2013 Bulletin 2013/06**

(73) Proprietor: **Essilor International
(Compagnie Générale d'Optique)
94220 Charenton-le-Pont (FR)**

(72) Inventors:
• **BITEAU, John
St. Petersburg, FL 33709 (US)**
• **FORD, Christy
St. Petersburg, FL 33709 (US)**
• **GLACET, Arnaud
St. Petersburg, FL 33709 (US)**

(74) Representative: **Santarelli
49, avenue des Champs-Elysées
75008 Paris (FR)**

(56) References cited:
**JP-A- 59 013 202**     **JP-A- 61 033 267**
**US-A1- 2005 146 680**     **US-A1- 2005 208 212**

**Description**

FIELD OF THE INVENTION

The invention relates to the dip-coating of a lens such as an ophthalmic lens.

BACKGROUND ART

One known method for coating the surfaces of a lens, for instance with an anti-reflective coating, is dip-coating.
In dip-coating, the lens is immersed in a coating solution bath and then withdrawn from the bath.
Dip-coating is very convenient but there is often a thickness variation of the coating between the top and the bottom of the lens, that is between the portions of the lens emerging respectively first and last.
Such a thickness variation is explained by the Landau & Levich theory which shows that for a lens having a convex surface and a concave surface, the coating is thicker at the top of the convex surface than at the bottom and thinner at the top of the concave surface than at the bottom.
Another reason for the thickness variation is the drainage of the liquid coating on the surfaces of the lens during and after the withdrawing step.
The invention is directed to a method of dip-coating which limits thickness variations.

SUMMARY OF THE INVENTION

US 2005/208212 A1 describes the preamble of claim 1- The invention accordingly provides a method of dip-coating a lens having a convex surface and a concave surface to be dip-coated, the method comprising the steps of:

- immersing the lens in a coating solution bath having a horizontal coating solution surface, and
- withdrawing the lens from said bath through said solution surface,

wherein the step of withdrawing is performed with a movement of the lens such that the orientation of the lens varies continuously, from a position in which the optical axis of the lens is inclined upwards and towards the concave surface of said lens when said lens starts emerging from said bath to a position in which the optical axis of the lens is inclined upwards and towards the convex surface of said lens when said lens finishes emerging from said bath.
The invention is based on the observation that with the conventional vertical withdrawal movement of the lens, that is with the optical axis of the lens remaining horizontal, at each moment during the withdrawal movement, at the line of contact with the horizontal coating solution surface, the concave surface and the convex surface have local orientations (on the line of contact) which are very different.
With the continuous variation of the orientation of the lens according to the invention, the concave surface passes through the horizontal coating solution surface with a local orientation which remains close to the local orientation of the convex surface.
Thanks to the closeness of the local orientations, the difference of thicknesses of the coatings on the concave and on the convex surfaces is minimized.
It should be noted that it is already known from US patent 5,153,027 to vary the orientation of a windshield when the windshield is withdrawn from the bath, the withdrawal movement being such that the orientation of the windshield remains perpendicular to a pivot. The goal of the variation of orientation is to achieve a thickness gradient on the windshield surfaces.
This is totally different from the method according to the invention, *inter alia* because:

- a windshield is not a lens having an optical axis;
- even if the central axis of the windshield is taken into account, US patent 5,153,027 teaches to maintain the central axis parallel to a pivot, i.e. to maintain the central axis parallel to itself, which is the contrary of the method of the invention where the optical axis has a continuously varying inclination; and
- achieving a thickness gradient is exactly the opposite of limiting the thickness variations as in the method of the invention.

According to preferred features of the method of the invention, said movement is performed such that the angles that the horizontal coating solution surface makes with the convex and concave surfaces are substantially equal during the withdrawal movement.
Of course, the angles are measured between the horizontal coating solution surface and the tangent to the convex surface or the concave surface at the line of contact with the horizontal coating solution surface in the vertical plane containing the optical axis.

Maintaining the equality or substantial equality of the angles on the convex surface side and on the concave surface side is very favourable to obtaining the same thickness on both sides.

According to features preferred as being very simple, convenient and economical for embodying the method according to the invention, the withdrawal movement is made with a fixed center of rotation positioned in the plane of said horizontal coating solution surface.

According to further preferred features:

- said center of rotation is the center of a circle arc reference line intermediate said convex and concave surfaces of the lens and crossing the optical axis of the lens ;
- said circle arc reference line has a radius determined by the following equation:

$$R_{reference} = \frac{R_{cx} + R_{cc}}{2} \; ;$$

wherein:

- $R_{reference}$ is the radius of the reference line;
- $R_{cx}$ is a radius of curvature of said convex surface; and
- $R_{cc}$ is a radius of curvature of said concave surface;

- said convex and concave surfaces are spherical, and $R_{cx}$ is the radius of said convex surface and $R_{cc}$ is the radius of said concave surface;
- said lens has a toric axis, the circle arc reference line is in a plane containing the toric axis of said lens, each of said convex and concave surfaces has a spherical component, and Rcx is the radius of the spherical component of said convex surface and Rcc is the radius of the spherical component of said concave surface;
- said circle arc reference line has a radius determined by the following equation:

$$R_{reference} = \frac{2 \times R_{cx} \times R_{cc} + \frac{T_c}{2} \times (R_{cx} - R_{cc})}{(R_{cx} + R_{cc})} \; ;$$

wherein:

- $R_{reference}$ is the radius of the reference line;
- $R_{cx}$ is a radius of curvature of said convex surface;
- $R_{cc}$ is a radius of curvature of said concave surface; and
- $T_c$ is a central thickness of said lens;

- said convex and concave surfaces are spherical, and $R_{cx}$ is the radius of said convex surface and $R_{cc}$ is the radius of said concave surface, and $T_c$ is measured on the optical axis of lens; and/or
- said lens has a toric axis, the circle arc reference line is in a plane containing the toric axis of said lens, each of said convex and concave surfaces has a spherical component, $R_{cx}$ is the radius of the spherical component of said convex surface and $R_{cc}$ is the radius of the spherical component of said concave surface, and $T_c$ is measured on the optical axis of the lens.

According other preferred features of the invention, useful in particular when the convex surface and/or the concave surface are of complex shape, for instance for a lens which is a progressive spectacle lens, the withdrawal movement is made with a mobile center of rotation remaining in the plane of said horizontal coating solution surface.

According to other preferred features, the withdrawal movement is performed with a variation of withdrawal speed.

As mentioned above, the thickness variations in the conventional dip-coating method are caused not only by the curvature of the concave surface and the convex surface (first reason) but also by the drainage of the liquid coating on the surfaces during and after the withdrawing step (second reason).

The variation of orientation of the lens during withdrawal obviates the first reason and the variation of withdrawal speed obviates the second reason.

It should be noted that varying simultaneously the orientation of the lens and the withdrawal speed enables to obviate simultaneously both reasons and therefore provide excellent result.

According to other preferred features:

- the withdrawal speed is decreased between the time when said lens starts emerging from said bath and the time when said lens finishes emerging from said bath; and/or
- the lens is a spectacle lens.

## BRIEF DESCRIPTION OF THE DRAWINGS

The description of the invention continues now with a detailed description of a preferred embodiment given hereinafter by way of nonlimiting illustration and with reference to the appended drawings. In these drawings:

- Figures 1 to 5 are schematic sectional views of a first lens being withdrawn from a coating bath at different stages of the withdrawing step;
- Figures 6 to 10 are schematic sectional views of a second lens being withdrawn from a coating bath at different stages of the withdrawing step;
- Figure 11 shows a spectacle lens having a toric axis; and
- Figure 12 is a partial schematic view showing an embodiment where the center of rotation is mobile.

## DETAILED DESCRIPTION OF PREFERED EMBODIMENTS

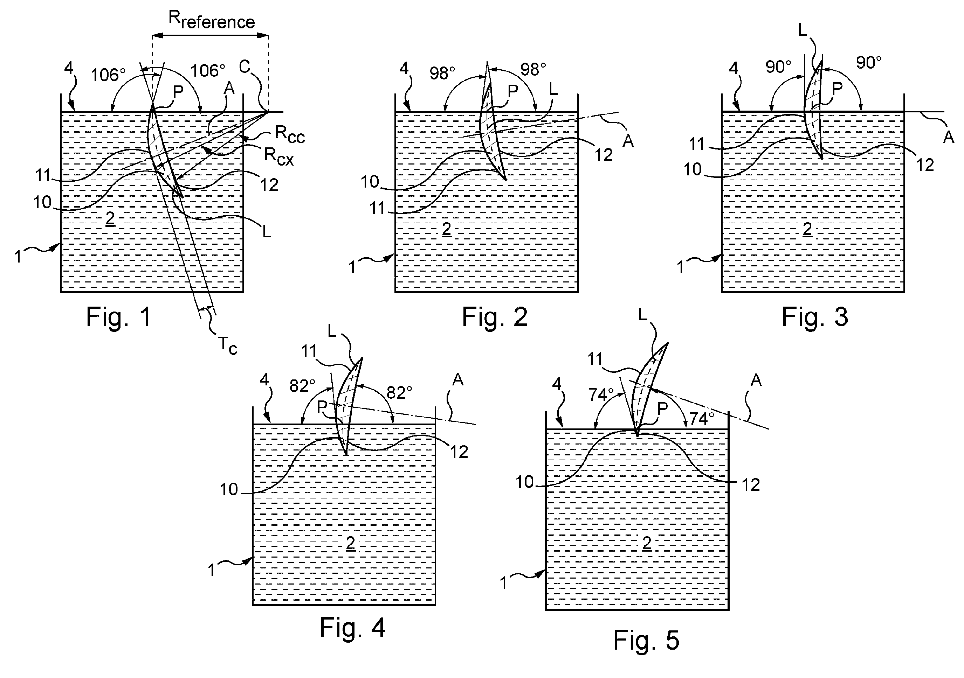

Figures 1 to 5 show a bath 1 of a coating solution 2 in which a lens 10 has been fully immersed and is being withdrawn.

The coating solution 2 is for example an anti-reflective coating solution.

The bath 1 has a horizontal coating solution surface 4 through which the lens 10 is withdrawn.

The lens is a spectacle lens 10 having an optical axis A.

Here, lens 10 has a cylindrical power equal to + 8 diopters.

The lens 10 has a convex surface 11 and a concave surface 12, which are optical grade surfaces. The convex and concave surfaces 11 and 12 are spherical and coaxial.

The radius of the spherical concave surface $R_{cc}$ is approximately equal to 546 mm, and the radius of the spherical convex surface $R_{cx}$ is approximately equal to 43 mm.

The lens 10 has a central thickness $T_c$ measured on the optical axis A of the lens 10, which is approximately equal to 9 mm.

As is apparent in Figures 1 to 5, the lens 10 is withdrawn through the horizontal coating solution surface 4 in an arcuate (curved) movement.

The arcuate movement is performed with a multi-axis machine, for example a robot (not shown) having an arm carrying at its distal end a holder having for example three fingers, one of which being mobile, in order to take the lens 10.

The machine is adapted to operate at low angular speeds.

The arcuate movement is made with a fixed center of rotation C which is positioned in the plane of the horizontal coating solution surface 4.

Here, the center of rotation C is the center of a circle arc reference line L intermediate the convex and concave surfaces 11 and 12 of the lens 10 and crossing the optical axis A of the lens 10.

Since C is at a fixed location in the plane of the horizontal coating solution surface 4, circle arc reference line L continuously crosses the same point P on the horizontal coating solution surface 4 during withdrawal movement.

The circle arc reference line L has a radius $R_{reference}$ based on the radii $R_{cx}$ and $R_{cc}$ of the spherical convex and concave surfaces 11 and 12 of the lens 10.

The radius $R_{reference}$ is determined by the following equation:

$$R_{reference} = \frac{2 \times R_{cx} \times R_{cc} + \dfrac{T_c}{2} \times \left(R_{cx} - R_{cc}\right)}{\left(R_{cx} + R_{cc}\right)} \, ;$$

wherein:

- $R_{cx}$ is the radius of the convex surface 11;
- $R_{cc}$ is the radius of the concave surface 12; and
- $T_c$ is the central thickness of the lens 10.

The radius $R_{reference}$ in this case is thus approximately equal to 76 mm.

The step of withdrawing is performed with the arcuate movement of the lens 10 such that the orientation of the lens 10 varies continuously, as illustrated on Figures 1 to 5 which show how lens 10 is oriented from the moment when it starts emerging (Figure 1) to the moment when it finishes emerging (Figure 5).

As is apparent in Figure 1, when lens 10 starts emerging from bath 2, optical axis A is inclined upwards and towards the concave surface 12. In other words, optical axis A is inclined downwards and towards the convex surface 11.

Figure 2 shows lens 10 with optical axis A in near horizontal orientation, and slightly inclined upwards and towards the concave surface 12.

Figure 3 shows lens 10 with optical axis A in horizontal orientation.

Figure 4 shows lens 10 with optical axis A in near horizontal orientation, and slightly inclined upwards and towards the convex surface 11.

And Figure 5 shows lens 10 with optical axis A inclined upwards and towards the convex surface 11. In other words, the optical axis A of the lens 10 is inclined downwards and towards the concave surface 12.

In Figure 5, the lens 10 is practically completely withdrawn from the bath 2.

As is apparent in Figures 1 to 5, the arcuate movement is performed such that the angles that the horizontal coating solution surface 4 makes with the convex and concave surfaces 11 and 12 are substantially equal during withdrawal.

As mentioned above, the angles taken into account are the angles between the horizontal coating solution surface 4 and the tangent to the convex surface 11 or the concave surface 12 at the line of contact with surface 4 in the vertical plane containing the optical axis A.

Figures 1 to 5 show the angle that the horizontal coating solution surface 4 makes with the convex and concave surfaces 11 and 12, said angle being respectively approximately equal to 106°, 98°, 90°, 82° and 74°.

As mentioned above, the arcuate movement is performed such that the fixed point P on the horizontal coating solution surface 4 is continuously coincident with the circle arc reference line L.

The point P remains at the same distance of the center of rotation C during withdrawal movement, as any point of the lens 10.

Moreover, the arcuate movement is performed by the machine such that the lens 10 is withdrawn through the horizontal coating solution surface 4 with a predetermined variation of withdrawal speed.

The speed (and more precisely the speed in the direction of movement) is for example decreased by 20 % between the time when the top of lens 10 emerges through surface 4 and the time when the bottom of lens 10 emerges through surface 4.

The appropriate speed variation is found for instance by a series of trials.

Thereby, the combination of the arcuate movement and the variation of withdrawal speed in order to have the appropriate coating solution thickness provide a lens with both the convex surface 11 and concave surface 12 which have a substantially uniform coating thickness profile after withdrawal.

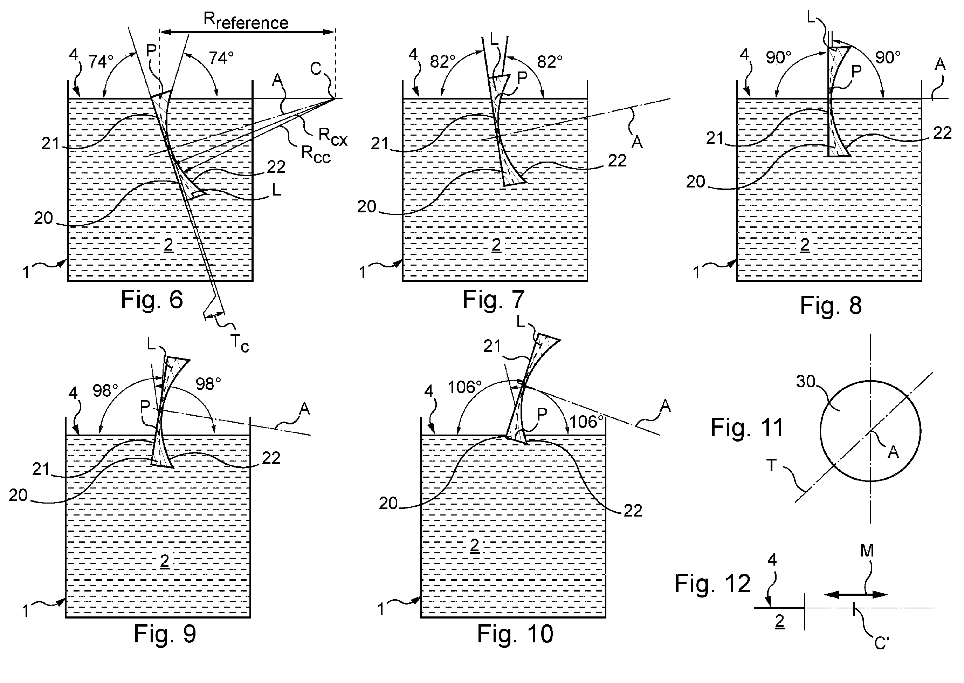

Figures 6 to 10 are similar to Figures 1 to 5, respectively, except that the lens 20 has different radii of curvature.

The lens is a spectacle lens 20 which has a cylindrical power equal to - 10 diopters.

The lens 20 has spherical and coaxial convex and concave surfaces 21 and 22, of which the respective radii $R_{cc}$ and $R_{cx}$ are approximately equal to 47 mm and to 669 mm.

Moreover, the lens 20 has a central thickness $T_c$ measured on the optical axis A of the lens 20 approximately equal to 2 mm.

The intermediate circle arc reference line L has a radius $R_{reference}$ determined as previously explained and approximately equal to 89 mm.

Figures 6 to 10 show the angle that the horizontal coating solution surface 4 makes with the convex and concave surfaces 21 and 22, said angle being respectively approximately equal to 74°, 82°, 90°, 98° and 106°.

In another embodiment of the present invention, the circle arc reference line L has a radius determined by the following equation:

$$R_{reference} = \frac{R_{cx} + R_{cc}}{2} \; ;$$

wherein:

- $R_{reference}$ is the radius of the reference line L;
- $R_{cx}$ is a radius of curvature of said convex surface; and
- $R_{cc}$ is a radius of curvature of said concave surface.

If the convex and concave surfaces are spherical, $R_{cx}$ is the radius of said convex surface and $R_{cc}$ is the radius of said concave surface.

Figure 11 shows a spectacle lens 30 having a toric axis T.

Lens 30 is dip-coated like lenses 10 and 20 with the circle arc reference line in a plane containing toric axis T.

The convex and concave surfaces of lens 30 have a spherical component.

The above formulae are applicable with $R_{cx}$ being the radius of the spherical component of the concave surface and $R_{cc}$ being the radius of the spherical component of the concave surface.

Figure 12 shows another embodiment where the center of rotation C' of the lens during the withdrawal movement is also in the plane of the horizontal coating surface 4 but the center of rotation C' is mobile during withdrawal (and not fixed) as shown by arrow M.

This embodiment is useful for lenses having complex surfaces, for instance a progressive spectacle lens.

For moving the lens with a mobile center of rotation such as C', the above mentioned multi-axes machine (robot arm) is very convenient.

In a variant, for the embodiments where the center of rotation and the radius of rotation are fixed, the machine axis has a simple rigid arm articulated at the center of rotation at one end and carrying the lens at the other end, said simple rigid arm being rotationally driven around the center of rotation.

In each of the above disclosed examples, the lens is a spectacle lens. In other embodiments, the lens is not a spectacle lens, but for instance another ophthalmic lens or a lens for an optical instrument.

## Claims

1. A method of dip-coating a lens (10; 20; 30) having a convex surface (11; 21) and a concave surface (12; 22) to be dip-coated, the method comprising the steps of:

   - immersing the lens (10; 20; 30) in a coating solution bath (2) having a horizontal coating solution surface (4), and
   - withdrawing the lens (10; 20; 30) from said bath (2) through said solution surface (4),

   **characterized by**, that the step of withdrawing is performed with a movement of the lens such that the orientation of the lens (10; 20; 30) varies continuously, from a position in which the optical axis (A) of the lens (10; 20; 30) is inclined upwards and towards the concave surface (12; 22) of said lens (10; 20; 30) when said lens (10; 20; 30) starts emerging from said bath (2) to a position in which the optical axis (A) of the lens (10; 20; 30) is inclined upwards and towards the convex surface (11; 21) of said lens (10; 20; 30) when said lens (10; 20; 30) finishes emerging from said bath (2).

2. The method according to claim 1, wherein said movement is performed such that the angles that the horizontal coating solution surface (4) makes with the convex and concave surfaces (11, 12; 21, 22) are substantially equal during the withdrawal movement.

3. The method according to any one of claims 1 and 2, wherein said movement is made with a fixed center of rotation (C) positioned in the plane of said horizontal coating solution surface (4).

4. The method according to claim 3, wherein said center of rotation (C) is the center of a circle arc reference line (L) intermediate said convex and concave surfaces (11, 12; 21, 22) of the lens (10; 20; 30) and crossing the optical axis (A) of the lens (10; 20; 30).

5. The method according to claim 4, wherein said circle arc reference line (L) has a radius ($R_{reference}$) determined by the following equation:

$$R_{reference} = \frac{R_{cx} + R_{cc}}{2};$$

wherein:

- $R_{reference}$ is the radius of the reference line (L);
- $R_{cx}$ is a radius of curvature of said convex surface (11; 21); and
- $R_{cc}$ is a radius of curvature of said concave surface (12; 22).

6. The method according to claim 5, wherein said convex and concave surfaces (11, 12; 21, 22) are spherical, and wherein $R_{cx}$ is the radius of said convex surface (11; 21) and $R_{cc}$ is the radius of said concave surface (12; 22).

7. The method according to claim 5, wherein said lens (30) has a toric axis (T), wherein the circle arc reference line is in a plane containing the toric axis (T) of said lens (30), wherein each of said convex and concave surfaces has a spherical component, and wherein $R_{cx}$ is the radius of the spherical component of said convex surface and $R_{cc}$ is the radius of the spherical component of said concave surface.

8. The method according to claim 4, wherein said circle arc reference line (L) has a radius ($R_{reference}$) determined by the following equation:

$$R_{reference} = \frac{2 \times R_{cx} \times R_{cc} + \frac{T_c}{2} \times (R_{cx} - R_{cc})}{(R_{cx} + R_{cc})} \; ;$$

wherein:

- $R_{reference}$ is the radius of the reference line (L);
- $R_{cx}$ is a radius of curvature of said convex surface (11; 21);
- $R_{cc}$ is a radius of curvature of said concave surface (12; 22); and
- $T_c$ is a central thickness of said lens (10; 20; 30).

9. The method according to claim 8, wherein said convex and concave surfaces (11, 12; 21, 22) are spherical, and wherein $R_{cx}$ is the radius of said convex surface (11; 21) and $R_{cc}$ is the radius of said concave surface (12; 22), and wherein $T_c$ is measured on the optical axis (A) of lens (10; 20).

10. The method according to claim 8, wherein said lens (30) has a toric axis (T), wherein the circle arc reference line is in a plane containing the toric axis (T) of said lens (30), wherein each of said convex and concave surfaces has a spherical component, wherein $R_{cx}$ is the radius of the spherical component of said convex surface and $R_{cc}$ is the radius of the spherical component of said concave surface, and wherein $T_c$ is measured on the optical axis (A) of the lens (30).

11. The method according to claim 1, wherein said movement is made with a mobile center of rotation (C') remaining in the plane of said horizontal coating solution surface (4).

12. The method according to any one of claims 1 to 11, wherein said movement is performed with a variation of withdrawal speed.

13. The method according to claim 12, wherein the withdrawal speed is decreased between the time when said lens (10; 20; 30) starts emerging from said bath (2) and the time when said lens (10; 20; 30) finishes emerging from said bath (2).

14. The method according to any one of claims 1 to 13, wherein the lens (10; 20; 30) is a spectacle lens.

**Patentansprüche**

1. Verfahren zur Tauchbeschichtung einer Linse (10; 20; 30), die eine konvexe Oberfläche (11; 21) und eine konkave Oberfläche (12; 22) besitzt, an denen die Tauchbeschichtung auszuführen ist, wobei das Verfahren die folgenden Schritte umfasst:

- Eintauchen der Linse (10; 20; 30) in ein Bad (2) einer Beschichtungslösung, das eine horizontale Oberfläche (4) der Beschichtungslösung besitzt, und
- Zurückziehen der Linse (10; 20; 30) aus dem Bad (2) durch die Oberfläche (4) der Lösung,

**dadurch gekennzeichnet, dass**
der Schritt des Zurückziehens mit einer Bewegung der Linse ausgeführt wird, so dass sich die Orientierung der Linse (10; 20; 30) aus einer Position, in der die optische Achse (A) der Linse (10; 20; 30) nach oben und zu der konkaven Oberfläche (12; 22) der Linse (10; 20; 30) geneigt ist, wenn das Auftauchen der Linse (10; 20; 30) aus dem Bad (2) beginnt, bis zu einer Position, in der die optische Achse (A) der Linse (10; 20; 30) nach oben und zu der konvexen Oberfläche (11; 21) der Linse (10; 20; 30) geneigt ist, wenn das Auftauchen der Linse (10; 20; 30) aus dem Bad (2) endet, kontinuierlich ändert.

2. Verfahren nach Anspruch 1, wobei die Bewegung so ausgeführt wird, dass die Winkel, die die horizontale Oberfläche (4) der Beschichtungslösung mit den konvexen und den konkaven Oberflächen (11, 12; 21, 22) bildet, während der Bewegung des Zurückziehens im Wesentlichen gleich sind.

3. Verfahren nach einem der Ansprüche 1 und 2, wobei die Bewegung mit einem festen Drehmittelpunkt (C) ausgeführt wird, der in der Ebene der horizontalen Oberfläche (4) der Beschichtungslösung positioniert ist.

4. Verfahren nach Anspruch 3, wobei der Drehmittelpunkt (C) der Mittelpunkt einer Kreisbogen-Bezugslinie (L) ist, die sich zwischen der konvexen und der konkaven Oberfläche (11, 12; 21, 22) der Linse (10; 20; 30) befindet und die optische Achse (A) der Linse (10; 20; 30) kreuzt.

5. Verfahren nach Anspruch 4, wobei die Kreisbogen-Bezugslinie (L) einen Radius ($R_{reference}$) besitzt, der durch die folgende Gleichung bestimmt ist:

$$R_{reference} = \frac{R_{CX} + R_{CC}}{2};$$

wobei:

- $R_{reference}$ der Radius der Bezugslinie (L) ist;
- $R_{cx}$ ein Krümmungsradius der konvexen Oberfläche (11; 21) ist; und
- $R_{cc}$ ein Krümmungsradius der konkaven Oberfläche (12; 22) ist.

6. Verfahren nach Anspruch 5, wobei die konvexe und die konkave Oberfläche (11, 12; 21, 22) sphärisch sind und wobei $R_{cx}$ der Radius der konvexen Oberfläche (11; 21) ist und $R_{cc}$ der Radius der konkaven Oberfläche (12; 22) ist.

7. Verfahren nach Anspruch 5, wobei die Linse (30) eine torische Achse (T) besitzt, wobei sich die Kreisbogen-Bezugslinie in einer Ebene befindet, die die torische Achse (T) der Linse (30) enthält, wobei jede der konvexen und der konkaven Oberfläche eine sphärische Komponente besitzt und wobei $R_{cx}$ der Radius der sphärischen Komponente der konvexen Oberfläche ist und $R_{cc}$ der Radius der sphärischen Komponente der konkaven Oberfläche ist.

8. Verfahren nach Anspruch 4, wobei die Kreisbogen-Bezugslinie (L) einen Radius ($R_{reference}$) besitzt, der durch die folgende Gleichung bestimmt ist:

$$R_{reference} = \frac{2 \times R_{CX} \times R_{CC} + \frac{T_C}{2} \times (R_{CX} - R_{CC})}{(R_{CX} + R_{CC})};$$

wobei:

- $R_{reference}$ der Radius der Bezugslinie (L) ist;
- $R_{cx}$ ein Krümmungsradius der konvexen Oberfläche (11; 21) ist;

- $R_{cc}$ ein Krümmungsradius der konkaven Oberfläche (12; 22) ist; und
- $T_c$ eine Mittendicke der Linse (10; 20; 30) ist.

**9.** Verfahren nach Anspruch 8, wobei die konvexe und die konkave Oberfläche (11, 12; 21, 22) sphärisch sind und wobei $R_{cx}$ der Radius der konvexen Oberfläche (11; 21) ist und $R_{cc}$ der Radius der konkaven Oberfläche (12; 22) ist und wobei $T_c$ auf der optischen Achse (A) der Linse (10; 20) gemessen wird.

**10.** Verfahren nach Anspruch 8, wobei die Linse (30) eine torische Achse (T) besitzt, wobei sich die Kreisbogen-Bezugslinie in einer Ebene befindet, die die torische Achse (T) der Linse (30) enthält, wobei jede der konvexen und der konkaven Oberfläche eine sphärische Komponente besitzt und wobei $R_{cx}$ der Radius der sphärischen Komponente der konvexen Oberfläche ist und $R_{cc}$ der Radius der sphärischen Komponente der konkaven Oberfläche ist und wobei $T_c$ auf der optischen Achse (A) der Linse (30) gemessen wird.

**11.** Verfahren nach Anspruch 1, wobei die Bewegung mit einem beweglichen Drehmittelpunkt (C') ausgeführt wird, der in der Ebene der horizontalen Oberfläche (4) der Beschichtungslösung bleibt.

**12.** Verfahren nach einem der Ansprüche 1 bis 11, wobei die Bewegung mit einer Variation der Geschwindigkeit des Zurückziehens ausgeführt wird.

**13.** Verfahren nach Anspruch 12, wobei die Geschwindigkeit des Zurückziehens zwischen dem Zeitpunkt, zu dem das Auftauchen der Linse (10; 20; 30) aus dem Bad (2) beginnt, und dem Zeitpunkt, zu dem das Auftauchen der Linse (10; 20; 30) aus dem Bad (2) endet, verringert wird.

**14.** Verfahren nach einem der Ansprüche 1 bis 13, wobei die Linse (10; 20; 30) ein Brillenglas ist.

**Revendications**

**1.** Procédé de revêtement par immersion d'une lentille (10 ; 20 ; 30) ayant une surface convexe (11 ; 21) et une surface concave (12 ; 22) devant être revêtues par immersion, le procédé comprenant les étapes consistant à :

- immerger la lentille (10 ; 20 ; 30) dans un bain de solution de revêtement (2) ayant une surface de solution de revêtement horizontale (4), et
- retirer la lentille (10 ; 20 ; 30) dudit bain (2) à travers ladite surface de solution (4),

**caractérisé en ce que** l'étape de retrait est effectuée par un mouvement de la lentille tel que l'orientation de la lentille (10 ; 20 ; 30) varie continûment, d'une position à laquelle l'axe optique (A) de la lentille (10 ; 20 ; 30) est incliné vers le haut et vers la surface concave (12 ; 22) de ladite lentille (10 ; 20 ; 30) lorsque ladite lentille (10 ; 20 ; 30) commence à émerger dudit bain (2), à une position à laquelle l'axe optique (A) de la lentille (10 ; 20 ; 30) est incliné vers le haut et vers la surface convexe (11 ; 21) de ladite lentille (10 ; 20 ; 30) lorsque ladite lentille (10 ; 20 ; 30) finit d'émerger dudit bain (2).

**2.** Procédé selon la revendication 1, dans lequel ledit mouvement est effectué de manière à ce que les angles formés par la surface de solution de revêtement horizontale (4) avec les surfaces convexe et concave (11, 12 ; 21, 22) soient sensiblement égaux pendant le mouvement de retrait.

**3.** Procédé selon l'une quelconque des revendications 1 et 2, dans lequel ledit mouvement est effectué avec un centre de rotation (C) fixe positionné dans le plan de ladite surface de solution de revêtement horizontale (4).

**4.** Procédé selon la revendication 3, dans lequel ledit centre de rotation (C) est le centre d'une ligne de référence d'arc de cercle (L) intermédiaire entre lesdites surfaces convexe et concave (11, 12 ; 21, 22) de la lentille (10 ; 20 ; 30) et passant par l'axe optique (A) de la lentille (10 ; 20 ; 30).

**5.** Procédé selon la revendication 4, dans lequel ladite ligne de référence d'arc de cercle (L) a un rayon ($R_{référence}$) déterminé par l'équation suivante :

$$R_{référence} = \frac{R_{cx} + R_{cc}}{2} \; ;$$

où

- $R_{référence}$ est le rayon de la ligne de référence (L) ;
- $R_{cx}$ est un rayon de courbure de ladite surface convexe (11 ; 21) ; et
- $R_{cc}$ est un rayon de courbure de ladite surface concave (12 ; 22).

6. Procédé selon la revendication 5, dans lequel lesdites surfaces convexe et concave (11, 12 ; 21, 22) sont sphériques, et dans lequel $R_{cx}$ est le rayon de ladite surface convexe (11 ; 21) et $R_{cc}$ est le rayon de ladite surface concave (12 ; 22).

7. Procédé selon la revendication 5, dans lequel ladite lentille (30) a un axe torique (T), dans lequel la ligne de référence d'arc de cercle se situe dans un plan contenant l'axe torique (T) de ladite lentille (30), dans lequel chacune desdites surfaces convexe et concave a une composante sphérique, et dans lequel $R_{cx}$ est le rayon de la composante sphérique de ladite surface convexe et $R_{cc}$ est le rayon de la composante sphérique de ladite surface concave.

8. Procédé selon la revendication 4, dans lequel ladite ligne de référence d'arc de cercle (L) a un rayon ($R_{référence}$) déterminé par l'équation suivante :

$$R_{référence} = \frac{2 \times R_{cx} \times R_{cc} + \frac{T_c}{2} \times (R_{cx} - R_{cc})}{(R_{cx} + R_{cc})} \; ;$$

où

- Rréférence est le rayon de la ligne de référence (L) ;
- $R_{cx}$ est un rayon de courbure de ladite surface convexe (11 ; 21) ;
- $R_{cc}$ est un rayon de courbure de ladite surface concave (12 ; 22) ; et
- $T_c$ est une épaisseur centrale de ladite lentille (10 ; 20 ; 30).

9. Procédé selon la revendication 8, dans lequel lesdites surfaces convexe et concave (11, 12 ; 21, 22) sont sphériques, et dans lequel $R_{cx}$ est le rayon de ladite surface convexe (11 ; 21) et $R_{cc}$ est le rayon de ladite surface concave (12 ; 22), et dans lequel $T_c$ est mesurée sur l'axe optique (A) de la lentille (10 ; 20).

10. Procédé selon la revendication 8, dans lequel ladite lentille (30) a un axe torique (T), dans lequel la ligne de référence d'arc de cercle se situe dans un plan contenant l'axe torique (T) de ladite lentille (30), dans lequel chacune desdites surfaces convexe et concave a une composante sphérique, dans lequel $R_{cx}$ est le rayon de la composante sphérique de ladite surface convexe et $R_{cc}$ est le rayon de la composante sphérique de ladite surface concave, et dans lequel $T_c$ est mesurée sur l'axe optique (A) de la lentille (30).

11. Procédé selon la revendication 1, dans lequel ledit mouvement est effectué avec un centre de rotation mobile (C') restant dans le plan de ladite surface de solution de revêtement horizontale (4).

12. Procédé selon l'une quelconque des revendications 1 à 11, dans lequel ledit mouvement est effectué avec une variation de la vitesse de retrait.

13. Procédé selon la revendication 12, dans lequel la vitesse de retrait est réduite entre l'instant auquel ladite lentille (10 ; 20 ; 30) commence à émerger dudit bain (2) et l'instant auquel ladite lentille (10 ; 20 ; 30) finit d'émerger dudit bain (2).

14. Procédé selon l'une quelconque des revendications 1 à 13, dans lequel la lentille (10 ; 20 ; 30) est une lentille pour lunettes.

Fig. 1

Fig. 2

Fig. 3

Fig. 4

Fig. 5

EP 2 552 682 B1

Fig. 8

Fig. 11

Fig. 12

Fig. 7

Fig. 10

Fig. 6

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005208212 A1
- US 5153027 A